(19) Europäisches Patentamt
European Patent Office
Office européen des brevets

(11) Veröffentlichungsnummer: **0 492 246 A2**

(12) # EUROPÄISCHE PATENTANMELDUNG

(21) Anmeldenummer: **91121063.1**

(22) Anmeldetag: **09.12.91**

(51) Int. Cl.5: **C08L 81/02**, C08L 77/00, C08L 67/00

(30) Priorität: **22.12.90 DE 4041519**

(43) Veröffentlichungstag der Anmeldung:
**01.07.92 Patentblatt 92/27**

(84) Benannte Vertragsstaaten:
**DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauer Strasse 31**
**W-4150 Krefeld(DE)**
Erfinder: **Köhler, Burkhard, Dr.**
**Mündelheimer Strasse 94**
**W-4150 Krefeld 11(DE)**

(54) **Thermoplastische Formmassen.**

(57) Die Erfindung betrifft thermoplastische Formmassen auf Basis von Polyamiden und/oder Polyestern sowie spezieller, funktionell modifizierter Polyarylensulfide und gegebenenfalls üblicher Zusatzstoffe, ihre Herstellung und ihre Verwendung.

EP 0 492 246 A2

Die Erfindung betrifft thermoplastische Formmassen auf Basis von Polyamiden und/oder Polyestern sowie spezieller, funktionell modifizierter Polyarylensulfide und gegebenenfalls üblicher Zusatzstoffe, ihre Herstellung und ihre Verwendung.

Polyarylensulfide mit funktionellen Gruppen sind bekannt (z.B. US-A 3 354 129. Intern. J. Polymeric Mater. 11 (87) 263). Weiterhin sind Phenylensulfid-Polymere bzw, -Oligomere mit funktionellen Endgruppen wie Carboxyl, Nitril etc. (Telechele) bekannt (z.B. Polymer Bulletin 4 (81) 459, FR-A 2 470 780, DE-A 3 421 608, DER-A 3 421 610).

Die beschriebenen, mit funktionellen Gruppen modifizierten Polyarylensulfide sind zum Teil schwer herstellbar, da ein Monomerbaustein mit funktioneller Gruppe bei der Synthese des Polymeren eingesetzt werden muß. Solche Comonomere können die Synthese erschweren, während der Reaktion unerwünschte Nebenreaktionen verursachen oder wegen nicht vollständigen Einbaus in die Polymerkette die Kreisläufe des Herstellungsprozesses verunreinigen.

Eine Modifizierung von Polyarylensulfiden mit OH- und/oder $NH_2$-Gruppen ist bei der Polymerisation schwierig, da halogenhaltige Phenole und/oder Aniline die Polymerisationsreaktion der Dihalogenbenzole mit der Schwefelquelle stören. Phenole werden als Regler bei der Polyarylensulfidsynthese eingesetzt, z.B. DE-A 3 601 215.

In den eigenen, bislang unveröffentlichten Patentanmeldungen P 3 927 658.9 (Le A 27 064) und P 3 929 171.5 (Le A 27 088) sind funktionell gepfropfte Polyarylensulfide, wobei die Pfropfung auf ein fertiges Arylensulfidpolymer bei höheren Temperaturen, vorzugsweise in der Schmelze in Knetern und Extrudern, erfolgt, beschrieben. Es wurde nun gefunden, daß diese funktionell gepfropften Polyarylensulfide sich sehr gut zur Herstellung von Legierungen mit Amid- und/oder estergruppenhaltigen Polymeren eignen.

Gegenstand der Erfindung sind daher thermoplastisch verarbeitbare Mischungen aus

1. mindestens einem Polymeren, welches Amid- und/oder Estergruppen im Molekül trägt, mit Ausnahme aromatischer Polycarbonate bzw. Polyestercarbonate und aromatischer flüssigkristalliner Polyester- und Polyestercarbonate,
2. mindestens einem funktionell gepfropften Arylensulfidpolymeren, hergestellt durch Reaktion von 80 bis 99 Gew.-% Arylensulfidpolymerer, bevorzugt Polyparaphenylensulfid, mit 0,1 bis 20 Gew.-% funktionell substituierter Aromaten der Formeln (I) bis (V),

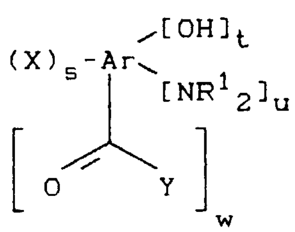

(I)

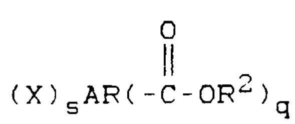

(II)

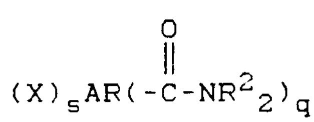

(III)

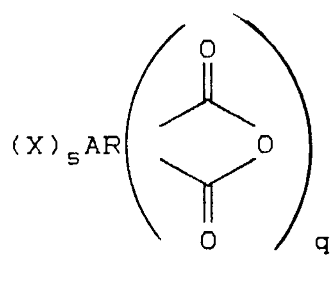

(IV)

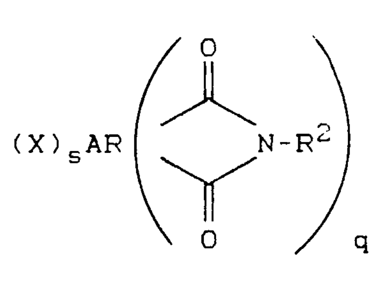

(V)

wobei

X für eine Nitrogruppe oder eine Sulfonsäuregruppe oder eine Alkalisulfonatgruppe steht,

$R^1$ für Wasserstoff, einen $C_1$-$C_{22}$-Alkylrest, der durch OH- oder $NH_2$-Gruppen substituiert sein kann, einen $C_1$-$C_{22}$-Acylrest oder einen $C_6$-$C_{14}$-Arylrest, der durch OH- oder $NH_2$-Gruppen substituiert sein kann, steht,

$R^2$ für ein Wasserstoffatom, einen $C_1$-$C_{12}$-Alkylrest, einen $C_6$-$C_{14}$-Arylrest oder einen $C_7$-$C_{12}$-Arylalkylrest, vorzugsweise für Wasserstoff, steht,

Ar für einen aromatischen $C_{6-20}$-Rest steht, der gegebenenfalls durch $C_{1-22}$-Alkylreste, Nitrogruppen, Nitrosogruppen, Halogen (z.B. Cl, Br), Sulfonsäure- und Alkalisulfonatgruppen substituiert sein kann,

Y für $R_1$ oder für eine $OR^1$- oder $NR^1{}_2$-Gruppe mit der für $R^1$ genannten Bedeutung steht,

q 1, 2 oder 3, vorzugsweise 1 oder 2, bedeutet,

s für 1, 2 oder 3 steht,

t, u und w für 0, 1 oder 2 stehen,

und wobei die Summe (s + t + u + w) kleiner 6 und die Summe (t + größer/gleich 1 ist,
wobei die Reaktion bei Temperaturen von mindestens 200 ° C, bevorzugt aber in der Schmelze ohne Lösungsmittel oberhalb des Schmelzpunktes des Arylensulfidpolymeren in Knetern oder Extrudern, durchgeführt wird,
sowie gegebenenfalls
3. bis 250 Gew.-%, bezogen auf 1) + 2), üblicher Zusatzstoffe.

Polyamide oder Polyester (1)

Als Polymere 1) sind aliphatische Polyamide und aliphatisch aromatische Polyester bevorzugt.

Beispiele hierfür sind Polyamid 6, 66, 46, 610, 612, 1212, 11, 12, 6T6, 6T/6, 69, 6/66-Copolyamide, PA 6I, PA 6I6, Poly-m-xylylenadipamid und andere mehr, bzw. Polyethylenterephthalat, Polybutylenterephthalat und Polyester auf Basis von Terephthalsäure, Cyclohexandimethanol sowie gegebenenfalls weiterer Monomerer.

Funktionell gepfropfte Polyphenylensulfide (2)

Beispiele für funktionell substituierte Aromaten der Formeln (I) bis (V), welche als Pfropfkomponente für Polyphenylensulfide eingesetzt werden können, sind: 2-, 3- und 4-Nitrobenzoesäure, 5-Nitro-isophthalsäure, 2-, 3- und 4-Sulfobenzoesäure, 3,5-Dinitrobenzoesäure, 5-Sulfoisophthalsäure, 3- und 4-Sulfo-phthalsäureanhydrid, 3- und 4-Nitrophthalsäureanhydrid, 4-Sulfonaphthalin-1,8-dicarbonsäureanhydrid, 4-Nitronaphthalin-1,8-dicarbonsäureanhydrid, 2-, 3- und 4-Hydroxybenzolsulfonsäure, 2-Hydroxy-5-nitrobenzolsulfonsäure, 4-Hydroxy-3-nitrobenzolsulfonsäure, 1-Hydroxy-2-naphthalinsulfonsäure, 4-Hydroxy-2-naphthalinsulfonsäure, 4-Hydroxy-1-naphthalinsulfonsäure, 5-Hydroxy-2-naphthalinsulfonsäure, 8-Hydroxy-2-naphthalinsulfonsäure, 8-Hydroxy-1-naphthalinsulfonsäure, 5-Hydroxy-1,6-naphthalinsulfonsäure,4-Hydroxy-2,7-naphthalinsulfonsäure, 4-Hydroxy-2,6-naphthalindisulfonsäure, 8-Hydroxy-1,6-naphthalinsulfonsäure, 4-Hydroxy-1,5-naphthalindisulfonsäure, 3-Hydroxy-1-naphthalinsulfonsäure, 3-Hydroxy-7-nitro-1-naphthalinsulfonsäure, 6-Hydroxy-1-naphthalinsulfonsäure, 6-Hydroxy-2-naphthalinsulfonsäure, 7-Hydroxy-2-naphthalinsulfonsäure, 4-Hydroxy-1,3,5-naphthalintrisulfonsäure, 7-Hydroxy-1-naphthalinsulfonsäure, 2-Hydroxy-6-nitro-1,4-naphthalindisulfonsäure, 3-Hydroxy-2,7-naphthalindisulfonsäure, 3-Hydroxy-2,6-naphthalindisulfonsäure, 3-Hydroxy-1,5-naphthalindisulfonsäure, 6-Hydroxy-1,3-naphthalindisulfonsäure, 7-Hydroxy-1,3-naphthalindisulfonsäure, 7-Hydroxy-1,3,6-naphthalintrisulfonsäure, 6-Hydroxy-1,3,8-pyrentrisulfonsäure, 4,8-Dihydroxy-2,6-naphthalindisulfonsäure, 4,7-Dihydroxy-2-naphthalinsulfonsäure, 4,6-Dihydroxy-2-naphthalinsulfonsäure, 4,5-Dihydroxy-2,7-naphthalindisulfonsäure, 6,7-Dihydroxy-2-naphthalinsulfonsäure, 3,6-Dihydroxy-2-naphthalinsulfonsäure, 3,6-Dihydroxy-2,7-naphthalindisulfonsäure, 6,8-Dihydroxy-1,3-pyrendisulfonsäure, 6-Hydroxy-5-nitroso-2-naphthalinsulfonsäure, 2-Hydroxy-5-sulfobenzoesäure, 4-Hydroxy-2-sulfobenzoesäure, 1-Hydroxy-4,7-disulfo-2-naphthalincarbonsäure, 3-Hydroxy-7-sulfo-2-naphthalincarbonsäure, 3,5-Dihydroxy-7-sulfo-2-naphthalincarbonsäure, 2-Aminobenzolsulfonsäure, 2-Amino-5-chlorbenzolsulfonsäure, 2-Amino-3,5-dichlorbenzolsulfonsäure,2-Amino-5-nitrobenzolsulfonsäure, 2-Amino-3,5-dinitrobenzolsulfonsäure, 3-Aminobenzolsulfonsäure, 3-Amino-4-chlorbenzolsulfonsäure, 5-Amino-2-chlorbenzolsulfonsäure, 2-Amino-2,4,5-trichlorbenzolsulfonsäure, 5-Amino-2-nitrobenzolsulfonsäure, 4-Aminobenzolsulfonsäure, 4-(Phenylamino)benzolsulfonsäure, 4-(Benzylamino)benzolsulfonsäure, N-(2-Amino-4-nitrophenyl)-sulfanilsäure, 4-Amino-2-nitrobenzolsulfonsäure, 4-Amino-3-nitrobenzolsulfonsäure, 4-Amino-3,5-dinitrobenzolsulfonsäure,2,4-Diaminobenzolsulfonsäure, 2,5-Diaminobenzolsulfonsäure, 5-Amino-2-(phenylamino)-benzolsulfonsäure, N,N'-Bis-(4-amino-2-sulfophenyl)-p-phenylendiamin, 5-Amino-2-(4-aminophenyl)-aminobenzolsulfonsäure, 3-Amino-4-(phenylamino)benzolsulfonsäure, 5-Amino-2-methylbenzolsulfonsäure,

2- Amino-5-chlor-3-methyl-benzolsulfonsäure, 2,4-Diamino-5- methylbenzolsulfonsäure, 3-Amino-4-methylbenzolsulfonsäure, 2-Amino-3,5-dimethylbenzolsulfonsäure, 2-Amino-1- naphthalinsulfonsäure, 4-Amino-1-naphthalinsulfonsäure, 5-Amino-1-naphthalinsulfonsäure, 5-Amino-8-nitro-1- naphthalinsulfonsäure, 6-Amino-1-naphthalinsulfonsäure, 7-Amino-1-naphthalinsulfonsäure, 7-Amino-5-nitro-1-naphthalinsulfonsäure, 8-Amino-1-naphthalinsulfonsäure, 1-Amino-2-naphthalinsulfonsäure, 5-Amino-2-naphthalinsulfonsäure, 6-Amino-2-naphthalinsulfonsäure, 7-(Methylamino)-2-naphthalinsulfonsäure, Benzidin-3-sulfonsäure, Anilin-3,5-disulfonsäure, 4,6-Diamino-1,3-benzoldisulfonsäure, 3-Amino-1,5-naphthalin-disulfonsäure, 3-Amino- 7-nitro-1,5-naphthalindisulfonsäure, 4,5-Diamino-2,7- naphthalindisulfonsäure, Benzidin-2,2'-disulfonsäure, 5-Amino-2-hydroxybenzolsulfonsäure, 5-Amino-2-hydroxy-3- nitro-benzolsulfonsäure, 3-Amino-4-hydroxybenzolsulfonsäure, 7-Amino-4-hydroxy-2-naphthalinsulfonsäure, 4- Amino-5-hydroxy-1,7-naphthalindisulfonsäure, 8-Amino-1- naphthol-3,6-disulfonsäure, 4-Amino-5-hydroxy-1,3- naphthalindisulfonsäure, 5-Sulfoanthranilsäure, 5-Sulfo- N-methyl-anthranilsäure, 5-Amino-2-hydroxy-3-sulfobenzoesäure und die N-Acetylverbindungen der aufgeführten Aminoverbindungen.

Zusatzstoffe (3)

Als Zusatzstoffe 3) kommen beispielsweise in Betracht: Gleitmittel, Entformungsmittel, Nucleiermittel, Farbstoffe, Pigmente, UV-Stabilisatoren, Antioxidantien, Füll-/Verstärkungsstoffe (bevorzugt Glasfasern, Kohlenstoffasern, Glaskugeln, Aramidfasern und mineralische Füllstoffe), Flammschutzmittel, polymere Legierungspartner, die Wasseraufnahme von Polyamiden verringernde Stoffe (bevorzugt Bisphenole und Phenol-Formaldehyd-Novolake) u.a.m.

Als polymere Legierungspartner kommen z.B. in Betracht: Dienkautschuke, Acrylat-Kautschuke, Polyethylene, Polypropylene, Ethylen-Propylen-Copolymere, Ethylen-1-Buten-Copolymere, Ethylen-Propylen-Dien-Terpolymere, Ethylen-Acrylsäure/Acrylester-Terpolymere, Ethylen-Vinylacetat-Copolymere, Polyoctenylene, Polystyrole, Styrol-(Meth)acrylnitrilcopolymere, (Meth)Acrylnitril-Butadien-Styrol-Polymere (ABS), schlagzähe Polystyrole, Polycarbonate, aromatische Polyester(carbonate), Polyester wie z.B. Polyethylenterephthalat, unmodifizierte Polyarylensulfide, Polysulfone, Polyphenylenoxide, Polyetherketone, Polyetheretherketone, Polyamidimide, Polyethersulfone, Polyetherimide, Polyesterimide, Polyimide, wie sie im Stand der Technik als Legierungspartner bzw. Modifikatoren bekannt sind.

Die polymeren Legierungspartner sollten, wenn nötig, gegebenenfalls zumindest teilweise, chemisch so modifiziert sein, daß eine partielle Ankopplung der beiden Phasen erfolgt. Dies kann z.B. dadurch geschehen, daß ein Copolymer aus Ethylen und/oder Propylen und geringen Mengen Acrylsäure, oder ein mit geringen Mengen Maleinsäureanhydrid gepfropftes Ethylen-Propylen(Dien)-Polymer oder ein mit geringen Mengen Maleinsäureanhydrid gepfropftes Polyphenylenoxid allein oder im Gemisch mit unmodifizierten Legierungspartnern eingesetzt werden. Ankopplung kann auch über Ester- oder Epoxidgruppen erfolgen. Es kann weiter z.B. dadurch geschehen, daß geeignete niedermolekulare oder polymere Verträglichkeitsvermittler anwesend sind, z.B. kann in Legierungen mit ABS ein Acrylnitril-Styrol-Acrylsäure-Terpolymer als Verträglichkeitsvermittler eingesetzt werden. Die Legierungspartner können auch reaktive Endgruppen aufweisen, welche mit dem Polyamid reagieren können, z.B. Amino- oder Carboxy-terminierte Polydien-Kautschuke.

Die Kautschuke können auch in einer Kern-Mantel-Struktur gepfropft sein.

Auch mit den erfindungsgemäß einzusetzenden Polyamiden verträgliche und/oder unverträgliche amorphe Polyamide können als Zusatzstoffe eingesetzt werden; z.B. können als amorphe Polyamide PA 6 I (Polyhexamethylenisophthalamid) oder auch Polyamide aus Isophthalsäure, Terephthalsäure, Hexamethylendiamin und gegebenenfalls 4,4'-Diaminodicyclohexylmethan eingesetzt werden,

Bevorzugte Legierungspartner sind solche, die üblicherweise zur Erhöhung der Kälte- und/oder Trokkenschlagzähigkeit eingesetzt werden (Schlagzähmodifikatoren) sowie amorphe Thermoplaste mit Glastemperaturen von mindestens 90 °C, bevorzugt mindestens 120 °C und besonders bevorzugt mindestens 160 °C.

Die Herstellung der erfindungsgemäßen Formmassen erfolgt durch Vermischen in der Schmelze, bevorzugt in Knetern und Extrudern, wobei gegebenenfalls Konzentrate eingesetzt werden können und die Vermischung in einem oder mehreren Schritten erfolgen kann.

Die Komponenten 1) und 2) sind bevorzugt in Verhältnissen von 0,1 bis 99 bzw, 99,9 bis 0,1 Gew.-Teilen enthalten. Besonders bevorzugt sind Mischungen aus 40 bis 99,5 Gew.-% 1) und 0,5 bis 60 Gew.-% 2) bzw. 60 bis 99,9 Gew.-% 2) und 0,5 bis 40 Gew.-% 1).

Die Komponenten 3) sind zusätzlich in Mengen von 0 bis 120 %, besonders bevorzugt 0,001 bis 100 Gew.-%, bezogen auf 1) + 2), in der fertigen Mischung enthalten.

Die erfindungsgemäß einzusetzenden, funktionell gepfropften Arylensulfidpolymere 2) sind aus den

eigenen, bislang unveröffentlichten Patentanmeldungen Le A 27 064 und Le A 27 088 bekannt.

Die Umsetzung wird bevorzugt ohne Solvens bei Temperaturen oberhalb des Schmelzpunktes des Polyarylensulfids bis 450 ° C, gegebenenfalls unter Inertgas, vorzugsweise unter Scherung, durchgeführt.

Einsetzbare Polyarylensulfide, vorzugsweise Polyphenylensulfide, sind bekannt, z.B. EP-A 171 021, US-A 3 354 129 und handelsüblich, z.B. als Tedur® oder Ryton®.

Die Umsetzung kann in Knetern oder (Schneckenwellen-) Extrudern durchgeführt werden.

Die erfindungsgemäßen Formmassen weisen eine hohe Härte und Steifigkeit auf. Gegenüber Formmassen auf Basis nichtmodifizierter Arylensulfidpolymerer können die Zähigkeitswerte bzw. Dehnungswerte erhöht sein. In Polyamid-Fasern führen die Komponenten 2) zu stark erhöhten Verstreckgraden und Festigkeiten. Weiterhin sind im allgemeinen gegenüber Polyamiden die Wasseraufnahme reduziert und die Kristallisationsgeschwindigkeit und die Dimensionsstabilität erhöht. Auch das Brandverhalten kann verbessert sein. Im Vergleich zu Polyamiden, ist bei den erfindungsgemäßen Formmassen häufig auch die Wärmeformbeständigkeit erhöht.

Die erfindungsgemäßen Formmassen können durch Spritzguß, Extrusion, Pultrusion, "film-stacking" und andere bekannte Verformungsverfahren zu Formkörpern, Folien, Fasern, Halbzeugen, Verbundwerkstoffen und anderen Gegenständen mehr verarbeitet werden. Sie sind eine wertvolle Ergänzung des Standes der Technik.

Die folgenden Beispiele mit typischen Einsatzstoffen in typischen Mengen dienen zur Erläuterung der Erfindung, ohne sie darauf einzuschränken.

Beispiele

Beispiele 1 bis 3 (Ausgangsmaterialien vom Typ (2))

Polyparaphenylensulfid der Viskosität 30 bis 60 Pas bei 310 ° C und 1000 $s^{-1}$ wurde mit je 2 Gew.-% Sulfonaphthalindisäureanhydrid (PPS a), 2 % Sulfanilsäure (PPS b) und 2 % 1-Hydroxy-2-naphthalinsulfonsäure (PPS c) trocken vermischt, bei ca. 320 ° C über einen ZSK 32-Doppelwellenextruder extrudiert und granuliert.

Aus diesen modifizierten Arylensulfidpolymeren sind mit Dioxan maximal 5 % der eingesetzten Sulfonsäuremengen wieder extrahierbar.

Beispiel 4 bis 10 (erfindungsgemäß)

Polyamid 6 ($\eta$rel = 3,5; 1 % in m-Kresol, 25 ° C) wurde mit je 1 bis 2 Gew.-% der PPS a-c bzw. ohne PPS compoundiert (ZSK 53-Doppelwellenextruder; 280 ° C; ohne PPS: 260 ° C; 30 kg/h).

Einige mechanische Eigenschaften der Proben sind in Tabelle 1 zusammengestellt.

Tabelle 1

| Beispiel | 4 | 5 | 6 | 7 | 8 | 9 | 10 |
|---|---|---|---|---|---|---|---|
| PPS-Typ (%) | - | 1 % a | 2 % a | 1 % b | 2 % b | 1 % c | 2 % c |
| $\delta_R$ (MPa) | 47 | 45 | 58 | 44 | 44 | 50 | 59 |
| $E_z$ (MPa) | 2917 | 3085 | 3122 | 3111 | 3136 | 3155 | 3253 |
| $\epsilon_R$ (%) | 101 | 46 | 27 | 49 | 38 | 35 | 19 |
| $D_{bB}$ (MPa) | 109 | 113 | 114 | 113 | 113 | 115 | 115 |
| DbR (%) | 6,0 | 5,8 | 5,9 | 5,8 | 5,8 | 5,8 | 5,8 |
| $E_B$ (MPa) | 2643 | 2732 | 2760 | 2760 | 2760 | 2763 | 2752 |
| Izod an[1)] | n.g. | n.g. | n.g. | n.g. | n.g. | n.g. | n.g. |
| HDT A (°C) | 56 | 56 | 57 | 57 | 57 | 60 | 60 |
| HDT B (°C) | 173 | 181 | 171 | 177 | 177 | 188 | 185 |
| $H_2O$-Aufnahme (%), 70°C | | | | | | | |
| 1 h | 1,37 | 1,40 | 1,35 | 1,38 | 1,37 | 1,41 | 1,42 |
| 2 h | 1,95 | 1,95 | 1,86 | 1,90 | 1,91 | 1,95 | 1,95 |
| 4 h | 2,85 | 2,81 | 2,70 | 2,74 | 2,74 | 2,79 | 2,79 |
| 8 h | 4,17 | 4,07 | 3,93 | 3,97 | 3,95 | 4,01 | 4,00 |
| 48 h | 9,45 | 9,04 | 8,92 | 8,97 | 8,91 | 8,90 | 8,92 |
| 120 h | 9,36 | 8,93 | 8,92 | 9,61 | 8,90 | 8,92 | 8,91 |
| $T_K$[2)] (°C) | 173,0 | 178,8 | 179,3 | 179,1 | 179,1 | 178,7 | 178,8 |

1) n.g. = nicht gebrochen

2) Kristallisationstemperatur beim Abkühlen, DSC

Beispiele 11 bis 15

Die Mischungen der Beispiele 4 bis 6 und 9 und 10 wurden auf einer Extruderspinnapparatur, prinzipiell wie in der eigenen, bislang unveröffentlichten Deutschen Patentanmeldung P 4 002 607.8 (Le A 27 148) beschrieben, zu Fasern versponnen.

Die Spinnbedingungen und Faserdaten sind in Tabelle 2 zusammengestellt.

Tabelle 2

| Beispiel | 4/11 | 5/12 | 6/13 | 9/14 | 10/15 |
|---|---|---|---|---|---|
| PPS-Typ | - | a | a | c | c |
| Menge (%) | - | 1 | 2 | 1 | 2 |
| $T_{Schmelze}$ (°C) | 328 | 325 | 328 | 328 | 326 |
| Druck (bar) | 29-30 | 29-30 | 29-30 | 30-31 | 30-31 |
| Abzug ($mmin^{-1}$) | 640 | 640 | 640 | 640 | 640 |
| Spinnverzug | 22,8 | 23,1 | 22,7 | 23,4 | 22,6 |
| Verstrecken (°C) (Heizschiene) | 195 | 195 | 95 | 195 | 195 |
| Fixieren (°C) (Heizgalette) | 170 | 170 | 170 | 170 | 170 |
| Streckgrad: | | | | | |
| 1. Stufe | 1:3,00 | 1:3,75 | 1:3,25 | 1:3,50 | 1:3,50 |
| 2. Stufe | 1:1,36 | 1:1,15 | 1:1,36 | 1:1,15 | 1:1,20 |
| Gesamt | 1:4,09 | 1:4,33 | 1:4,43 | 1:4,03 | 1:4,2 |
| Titer (dtex) | 129 | 121 | 120 | 118 | 130 |
| Festigkeit (cN/dtex) | 4,36 | 5,22 | 6,42 | 5,12 | 5,17 |

Beispiele 16 und 17

60 Teile eines 50 % glasfaserverstärkten PA 6 ($\eta$rel ≅ 2,9) und 40 % PPS a bzw. eines unmodifizierten PPS (33 Pas bei 310 °C und 1000 $s^{-1}$) wurden über einen ZSK 30-Doppelwellenextruder compoundiert und zu Prüfstäben verspritzt. Mechanische Eigenschaften sind in Tabelle 3 zusammengestellt.

Tabelle 3

| Beispiel | PPS | DbB[1)] (%) | SbB[1)] (%) | $a_n$[2)] ($kJ/m^2$) |
|---|---|---|---|---|
| 16 | a | 2,54 | 214,1 | 24,6 |
| 17 | unmodif. | 2,04 | 188,3 | 20,8 |

1) Randfaserdehnung bzw. Biegespannung bei Höchstkraft (DIN 53 452)

2) ISO 180, Methode 1C

## Patentansprüche

**1.** Thermoplastisch verarbeitbare Mischungen aus

1. mindestens einem Polymeren, welches Amid- und/oder Estergruppen im Molekül trägt, mit Ausnahme aromatischer Polycarbonate bzw. Polyestercarbonate und aromatischer flüssigkristalliner Polyester- und Polyestercarbonate,

2. mindestens einem funktionell gepfropften Arylensulfidpolymeren, hergestellt durch Reaktion von 80 bis 99 Gew.-% Arylensulfidpolymerer, bevorzugt Polyparaphenylensulfid, mit 0,1 bis 20 Gew.-% funktionell substituierter Aromaten der Formeln (I) bis (V),

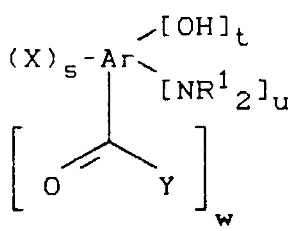

(I)

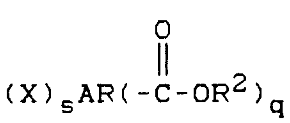

(II)

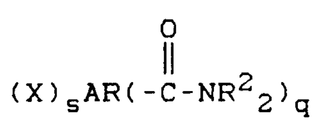

(III)

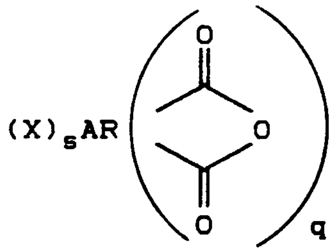

(IV)

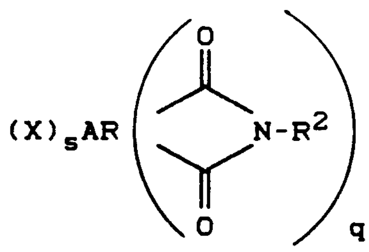

(V)

wobei

| | |
|---|---|
| X | für eine Nitrogruppe oder eine Sulfonsäuregruppe oder eine Alkalisulfonatgruppe steht, |
| $R^1$ | für Wasserstoff, einen $C_1$-$C_{22}$-Alkylrest, der durch OH- oder $NH_2$-Gruppen substituiert sein kann, einen $C_1$-$C_{22}$-Acylrest oder einen $C_6$-$C_{14}$-Arylrest, der durch OH- oder $NH_2$-Gruppen substituiert sein kann, steht, |
| $R^2$ | für ein Wasserstoffatom, einen $C_1$-$C_{12}$-Alkylrest, einen $C_6$-$C_{14}$-Arylrest oder einen $C_7$-$C_{12}$-Arylalkylrest, vorzugsweise für Wasserstoff, steht, |
| Ar | für einen aromatischen $C_{6-20}$-Rest steht, der gegebenenfalls durch $C_{1-22}$-Alkylreste, Nitrogruppen, Nitrosogruppen, Halogen (z.B. Cl, Br), Sulfonsäure- und Alkalisulfonatgruppen substituiert sein kann, |
| Y | für $R_1$ oder für eine $OR^1$- oder $NR^1_2$-Gruppe mit der für $R^1$ genannten Bedeutung steht, |
| q | 1, 2 oder 3, vorzugsweise 1 oder 2, bedeutet, |
| s | für 1, 2 oder 3 steht, |
| t, u und w | für 0, 1 oder 2 stehen, |

und wobei die Summe (s + t + u + w) kleiner 6 und die Summe (t + u) größer/gleich 1 ist,

und wobei die Summe (s+t+u+w) kleiner 6 und die Summe (t+u) größer/gleich 1 ist, wobei die Reaktion bei Temperaturen von mindestens 200 °C, bevorzugt aber in der Schmelze ohne Lösungsmittel oberhalb des Schmelzpunktes des Arylensulfidpolymeren, beispielsweise in Knetern oder Extrudern, durchgeführt wird, sowie gegebenenfalls

3) zusätzlich bis 250 Gew.-%, bezogen auf 1) und 2), üblicher Zusatzstoffe.

**2.** Formmassen nach Anspruch 1, bevorzugt enthaltend als Komponente 2) solche funktionell modifizierten Polyarylensulfide, welche Carboxylgruppen (bzw. ihre Derivate wie Ester-, Amid-, Anhydridgruppen und andere mehr), aliphatische Aminogruppen oder phenolische Hydroxylgruppen enthalten.

**3.** Formmassen nach Ansprüchen 1 bis 2, enthaltend als Polymere 1) bevorzugt Polyamid 6, 66, 46, 610, 612, 1212, 11, 12, 6T6, 69, 6/66-Copolyamide, PA 6I, PA 6I6, PA 6T/6, Poly-m-xylylenadipamid und andere mehr bzw. Polyethylenterephthalat, Polybutylenterephthalat und Polyester auf Basis von Terephthalsäure, Cyclohexandimethanol sowie gegebenenfalls weiterer Monomerer.

**4.** Formmassen nach Ansprüchen 1 bis 3, enthaltend als Zusatzstoffe 3) Gleitmittel, Entformungsmittel, Nucleiermittel, Farbstoffe, Pigmente, UV-Stabilisatoren, Antioxidantien, Füll-/Verstärkungsstoffe (bevorzugt Glasfasern, Kohlenstoffasern, Glaskugeln, Aramidfasern und mineralische Füllstoffe), Flammschutzmittel, polymere Legierungspartner, die Wasseraufnahme von Polyamiden verringernde Stoffe (bevorzugt Bisphenole und Phenol-Formaldehyd-Novolacke) u.a.m.

**5.** Formmassen nach Ansprüchen 1 bis 4, enthaltend bevorzugt die Komponenten 1) und 2) in Mengen von 0,1 bis 99,9 bzw. 99,1 bis 0,1 Gew.-% und besonders bevorzugt zu 40 bis 99,5 Gew.-% (Komponente 1) und 0,5 bis 60 Gew.-% (Komponente 2) bzw. 60 bis 99,5 Gew.-% (Komponente 2) und 0,5 bis 40 Gew.-% (Komponente 1).

**6.** Verfahren zur Herstellung der Polyamid-Formmassen nach Ansprüchen 1 bis 5, dadurch gekennzeichnet, daß die Komponenten in der Schmelze, bevorzugt in Extrudern oder Knetern, miteinander

vermischt werden,

7. Verwendung der Polyamid-Formmassen nach Anspruch 1 zur Herstellung von Formkörpern, Folien, Fasern, Verbundwerkstoffen (Composites) und anderen Gegenständen nach z.B. Verfahren des Spritzgießens und der Extrusion.

8. Formkörper, Folien, Fasern, Verbundwerkstoffe (Composites) und andere Gegenstände aus Polyamid-Formmassen nach Anspruch 1.